# EUROPEAN PATENT APPLICATION

(11) **EP 4 822 332 A1**
(43) Date of publication of application: **14.10.2026**
(21) Application number: 24943178.4
(22) Date of filing: 30.10.2024
(51) Int. Cl.: G01N 15/00

(54) **TEMPERATURE COMPENSATION METHOD AND APPARATUS FOR METAL ABRASIVE PARTICLE SENSOR, AND MEDIUM AND DEVICE**

(30) Priority: 14.06.2024 CN 202410766828
(71) Applicant: Jiangsu Advanced Construction Machinery Innovation Center Ltd., Xuzhou, Jiangsu 221004 (CN)
(72) Inventor: GAO, Xiafang, Xuzhou, Jiangsu 221004 (CN); CUI, Jingbing, Xuzhou, Jiangsu 221004 (CN); WANG, Jintao, Xuzhou, Jiangsu 221004 (CN)
(74) Representative: Bayramoglu et al.
(86) International application number: PCT/CN2024/128324
(87) International publication number: WO 2025/256024

(57) **Abstract**

This application discloses a temperature compensation method, apparatus, medium and device for a metal wear debris sensor. The method includes: obtaining influence parameters relating to an internal coil and a magnetic ring of a target metal wear debris sensor, a drive circuit of an excitation coil, a detection circuit of an induction coil, and a main control circuit; calculating a first influence factor, a second influence factor, a third influence factor, and a fourth influence factor; calculating a temperature compensation coefficient based on a currently acquired temperature and the calculated first influence factor, second influence factor, third influence factor, and fourth influence factor; and amplifying or attenuating an acquired signal based on the temperature compensation coefficient. This application calculates the temperature compensation coefficient by itemizing the temperature influence factors of different parts of the metal wear debris sensor, thereby enabling precise compensation for the metal wear debris sensor under different temperature influences and even extreme temperature conditions, and ensuring high precision of data acquired by the metal wear debris sensor.

## Description

### TECHNICAL FIELD

This application relates to a temperature compensation method, apparatus, medium, and device for a metal wear debris sensor, and relates to the technical field of construction machinery.

### BACKGROUND

An operating temperature of an electronic system in construction machinery generally falls within a range of -40 °C to 90 °C. When this temperature range is exceeded, various components of a metal wear debris sensor are significantly affected by temperature, and various parameters measured under normal temperature conditions exhibit substantial variations under high- or low-temperature conditions. Without a compensation algorithm, some sensor components undergo changes in various properties due to temperature effects, such as changes in stiffness, inductive reactance, or impedance, all of which adversely affect detection precision. Therefore, conventional approaches and existing approaches strictly limit the temperature range. Once the temperature range is exceeded, data output is discontinued, and detection may even cease, resulting in functional failure of the sensor.

The operating temperature range is relatively narrow. Under high-temperature conditions, temperature drift is severe. Conventional civilian metal wear debris sensors typically operate at a temperature approximately ranging from -20 °C to 80 °C, being unable to meet the complex operating environments of construction machinery. During operation of a metal wear debris sensor, various components of the sensor are significantly affected by temperature, and various parameters measured under normal temperature conditions exhibit substantial variations under high-temperature conditions. Without a compensation algorithm, some sensor components undergo changes in various properties due to temperature effects, such as changes in stiffness, inductive reactance, or impedance, all of which adversely affect detection precision.

Most metal wear debris sensors are applied to industrial environments and are not suitable for engineering equipment because high-temperature operating conditions have not been adequately considered.

The operating temperature range of existing metal wear debris sensors generally meets merely industrial application requirements. However, wide-temperature metal wear debris sensors for use in the aerospace industry are expensive, and currently there is no mature sensor suitable for online monitoring of wear debris in oil for construction machinery.

### SUMMARY

A technical objective of this application is to overcome the defects of the prior art and to provide a temperature compensation method, apparatus, medium, and device for a metal wear debris sensor, so as to solve the problem of reduced detection precision caused by ambient temperature effects, and particularly the problem of functional failure under extreme temperature conditions.

To achieve the above objective, this application puts forward the following technical solutions:
According to one aspect, this application discloses a temperature compensation method for a metal wear debris sensor. The method includes the following steps:
obtaining influence parameters relating to an internal coil and a magnetic ring of a target metal wear debris sensor, a drive circuit of an excitation coil, a detection circuit of an induction coil, and a main control circuit, where the influence parameters include: a temperature influence parameter on the coil and the magnetic ring, a temperature influence parameter on the drive circuit of the excitation coil, a temperature influence parameter on the detection circuit of the induction coil, and a temperature influence parameter on the main control circuit;
calculating a first influence factor based on the temperature influence parameter on the coil and the magnetic ring; calculating a second influence factor based on the temperature influence parameter on the drive circuit of the excitation coil and the temperature influence parameter on the detection circuit of the induction coil; calculating a third influence factor based on the temperature influence parameter on the detection circuit of the induction coil; and calculating a fourth influence factor based on the temperature influence parameter on the main control circuit;
calculating a temperature compensation coefficient based on a currently acquired temperature and the calculated first influence factor, second influence factor, third influence factor, and fourth influence factor; and
amplifying or attenuating an acquired signal based on the temperature compensation coefficient.

Further, the obtaining of the temperature influence parameter on the coil and the magnetic ring includes:
maintaining the drive circuit B of the excitation coil, the detection circuit C of the coil, and the main control circuit D in a fixed-temperature environment, and acquiring a temperature and a coil resistance of the coil and a magnetic ring assembly A in a temperature rise process within a target temperature range;
analyzing the temperature and the coil resistance and calculating a correlated influence curve and a correlated influence temperature interval; and
fitting the influence curve to obtain a temperature influence parameter on the coil and the magnetic ring within the influence temperature interval.

Further, the obtaining of the temperature influence parameter on the drive circuit of the excitation coil includes:
maintaining the coil and the magnetic ring, the detection circuit of the coil, and the main control circuit in a fixed-temperature environment, and acquiring a temperature and an excitation output amplitude of the drive circuit of the excitation coil in a temperature rise process within a target temperature range;
analyzing the temperature and the excitation output amplitude and calculating a correlated influence curve and a correlated influence temperature interval; and
fitting the influence curve to obtain a temperature influence parameter B1 on the drive circuit of the excitation coil within the influence temperature interval.

Further, the obtaining of the temperature influence parameter on the detection circuit of the induction coil includes:
maintaining the coil and the magnetic ring, the drive circuit of the excitation coil, and the main control circuit in a fixed-temperature environment, and acquiring a temperature and a detection amplitude of the detection circuit of the induction coil in a temperature rise process within a target temperature range;
analyzing the temperature and the detection amplitude and calculating a correlated influence curve and a correlated influence temperature interval; and
fitting the influence curve to obtain a temperature influence parameter C1 on the detection circuit of the induction coil within the influence temperature interval.

Further, the obtaining of the temperature influence parameter on the main control circuit includes:
maintaining the coil and the magnetic ring, the drive circuit of the excitation coil, and the detection circuit of the induction coil in a fixed-temperature environment, and acquiring a temperature and an output amplitude of the main control circuit in a temperature rise process in the fixed-temperature environment;
analyzing the temperature and the output amplitude of the main control circuit and calculating a correlated influence curve and a correlated influence temperature interval; and
fitting the influence curve to obtain a temperature influence parameter D1 on the main control circuit within the influence temperature interval.

Further, a formula for calculating the first influence factor is: ${K}_{1} = {A}_{1} lg \left({T}_{1}/{T}_{0}\right) .$

In the formula, K₁ represents the first influence factor, A₁ represents the temperature influence parameter on the coil and the magnetic ring, T₁ represents a current temperature of the coil and the magnetic ring, T₀ represents a reference temperature, and -30 °C ≤ T₁ ≤ 100 °C.

A formula for calculating the second influence factor is: ${K}_{2} = {B}_{1} lg \left({T}_{2}/{T}_{0}\right) .$

In the formula, K₂ represents the second influence factor, B₁ represents the temperature influence parameter on the drive circuit of the excitation coil, T₂ represents a current temperature of the drive circuit of the excitation coil, T₀ represents a reference temperature, and T₂ ≥ 75 °C;

A formula for calculating the third influence factor is: ${K}_{3} = {C}_{1} lg \left(T/{T}_{0}\right) .$

In the formula, K₃ represents the second influence factor, C₁ represents the temperature influence parameter on the detection circuit of the induction coil, T₃ represents a current temperature of the detection circuit of the induction coil, T₀ represents a reference temperature, and T₃ ≥ 75 °C.

A formula for calculating the fourth influence factor is: ${K}_{4} = {D}_{1} lg \left(T/{T}_{0}\right) .$

In the formula, K₄ represents the second influence factor, D₁ represents the temperature influence parameter on the main control circuit, T₄ represents a current temperature of the main control circuit, T₀ represents a reference temperature, and T₄ ≥ 85 °C.

Further, a formula for calculating the temperature compensation coefficient is: ${F}_{m} = {T}_{1} \times {K}_{1} + {T}_{2} \times {K}_{2} + {T}_{3} \times {K}_{3} + {T}_{4} \times {K}_{4} .$

In the formula, Fₘ is the temperature compensation coefficient.

According to a second aspect, this application further discloses a temperature compensation apparatus for a metal wear debris sensor, including:
an obtaining module, configured to obtain influence parameters relating to an internal coil and a magnetic ring of a target metal wear debris sensor, a drive circuit of an excitation coil, a detection circuit of an induction coil, and a main control circuit, where the influence parameters include: a temperature influence parameter on the coil and the magnetic ring, a temperature influence parameter on the drive circuit of the excitation coil, a temperature influence parameter on the detection circuit of the induction coil, and a temperature influence parameter on the main control circuit;
a first calculation module, configured to calculate a first influence factor based on the temperature influence parameter on the coil and the magnetic ring; calculate a second influence factor based on the temperature influence parameter on the drive circuit of the excitation coil and the temperature influence parameter on the detection circuit of the induction coil; calculate a third influence factor based on the temperature influence parameter on the detection circuit of the induction coil; and calculate a fourth influence factor based on the temperature influence parameter on the main control circuit;
a second calculation module, configured to calculate a temperature compensation coefficient based on a currently acquired temperature and the calculated first influence factor, second influence factor, third influence factor, and fourth influence factor; and
a compensation module, configured to amplify or attenuate an acquired signal based on the temperature compensation coefficient.

According to a third aspect, this application further discloses a computer-readable storage medium storing one or more programs. The one or more programs include an instruction. When executed by a computing device, the instruction causes the computing device to perform the method.

According to a fourth aspect, this application further discloses a computer device, including: one or more processors, a memory, and one or more programs, where the one or more programs are stored in the memory and are configured to be executed by the one or more processors, and the one or more programs include an instruction for performing the method.

This application achieves at least the following beneficial effects:
This application calculates the temperature compensation coefficient by itemizing the temperature influence factors of different parts of the metal wear debris sensor, thereby enabling precise compensation for the metal wear debris sensor under different temperature influences and even extreme temperature conditions, and ensuring high precision of data acquired by the metal wear debris sensor.

### BRIEF DESCRIPTION OF DRAWINGS

FIG. 1 is a schematic flowchart of a temperature compensation method according to this application;
FIG. 2 is a schematic diagram of operating principles of a conventional metal wear debris sensor;
FIG. 3 is a schematic diagram of a fitted temperature influence parameter on a coil and a magnetic ring;
FIG. 4 is a schematic diagram of a fitted temperature influence parameter on a drive circuit of an excitation coil;
FIG. 5 is a schematic diagram of a fitted temperature influence parameter on a detection circuit of an induction coil;
FIG. 6 is a schematic diagram of a fitted temperature influence parameter on a main control circuit; and
FIG. 7 is a schematic diagram of detection principles of a metal wear debris sensor in a hydraulic circuit of construction machinery.

### DETAILED DESCRIPTION

The following describes this application in further detail with reference to accompanying drawings. The following embodiments are merely intended to describe the technical solutions of this application more clearly, but not intended to limit the protection scope of this application.

### Embodiment 1

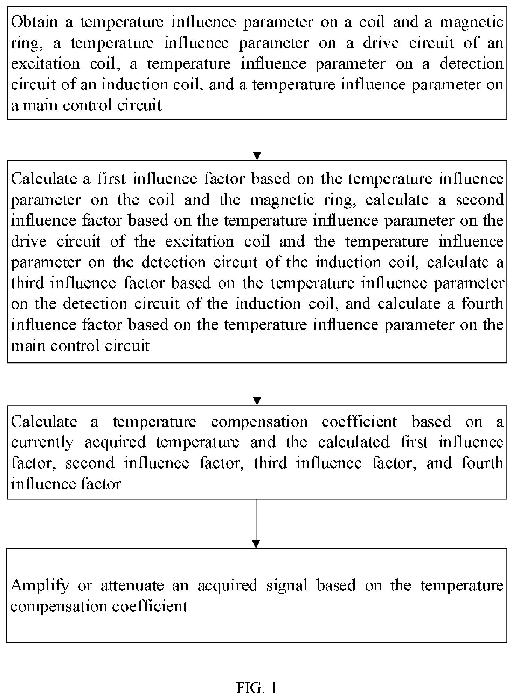

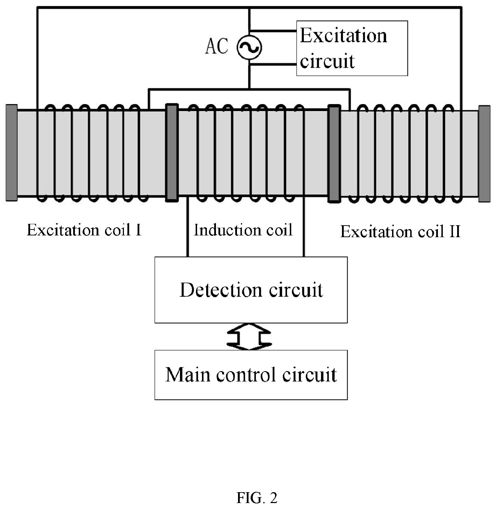

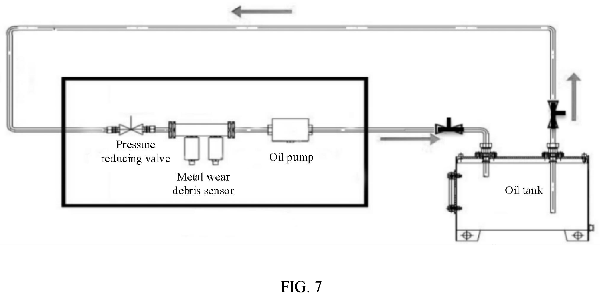

This embodiment illustrates a temperature compensation method for a metal wear debris sensor. The metal wear debris sensor is a conventional product, with operating principles shown in FIG. 2. The detection principles of the method in a hydraulic circuit of construction machinery are shown in FIG. 7. The metal wear debris sensor includes: a coil and magnetic ring assembly A, a drive circuit B of an excitation coil, a detection circuit C of a coil, and a main control circuit D. As shown in FIG. 1, the method includes the following steps:
obtaining a temperature influence parameter on the coil and the magnetic ring, a temperature influence parameter on the drive circuit of the excitation coil, a temperature influence parameter on the detection circuit of the induction coil, and a temperature influence parameter on the main control circuit;
calculating a first influence factor based on the temperature influence parameter on the coil and the magnetic ring; calculating a second influence factor based on the temperature influence parameter on the drive circuit of the excitation coil and the temperature influence parameter on the detection circuit of the induction coil; calculating a third influence factor based on the temperature influence parameter on the detection circuit of the induction coil; and calculating a fourth influence factor based on the temperature influence parameter on the main control circuit;
calculating a temperature compensation coefficient based on a currently acquired temperature and the calculated first influence factor, second influence factor, third influence factor, and fourth influence factor; and
amplifying or attenuating an acquired signal based on the temperature compensation coefficient.

Based on the characteristics of the materials, the drive chip, and the main control chip, the following circumstances are distinguished: (i) Digital circuits are not prone to be affected by temperature changes, such that the influence is disregarded; (ii) analog drive circuits, especially operational amplifiers and transistors, are prone to be affected by temperature effects, and such effects exhibit a nonlinear relationship; and (iii) materials of the components such as coils are significantly affected by temperature to an extent that varies with the temperature change. Based on the above analysis, it is determined that a wire resistance of the coil and the magnetic ring assembly A is affected by temperature within the full range of 0 to 100 °C. The wire resistance is expressed as: R₂ = R₁(M + t₁)/(M + t₂), where R₁ and R₂ are resistance values at temperatures t₁ and t₂, respectively, and M is a material-related constant. The temperature effect is exerted across the entire range: A₁lg(T/T₀). The characteristics of the drive circuit and an acquisition circuit, which extensively employ operational amplifiers and transistors, determine that the temperature effect is generally exerted at 75 °C or above, and the circuit influence factor T is greater than or equal to 75 °C, expressed as B₁lg(T/T₀) and C₁lg(T/T₀). The main control circuit affected is primarily the ADC circuit, and the main influence temperature is 85 °C or above.

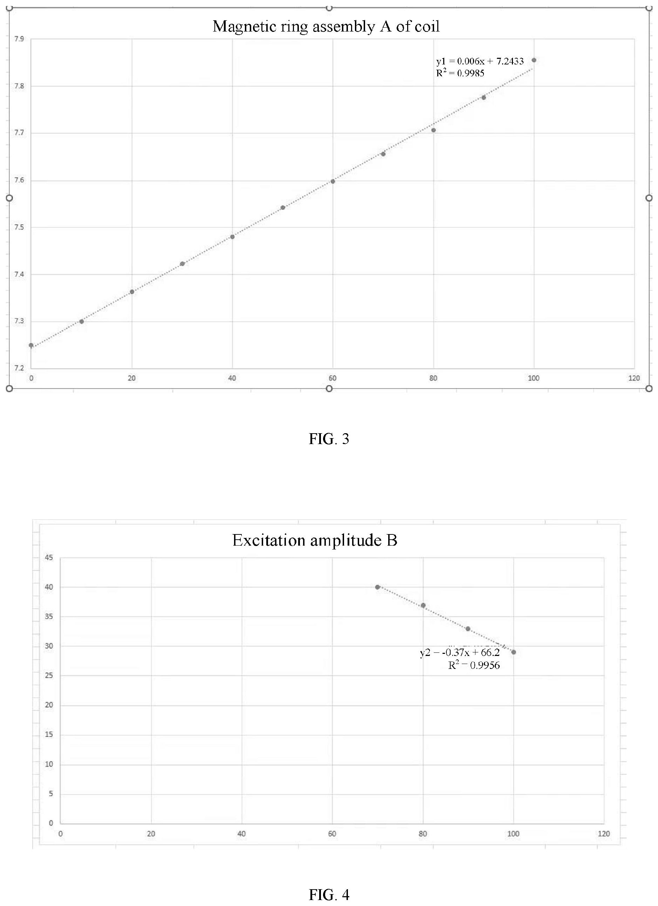

In this embodiment, in order to obtain the influence parameter of temperature affecting the coil and the magnetic ring, the following steps are performed:
maintaining the drive circuit of the excitation coil, the detection circuit of the coil, and the main control circuit in a 25 °C environment, and acquiring a temperature and a coil resistance of the coil and a magnetic ring assembly A in a temperature rise process within a temperature range of 0 to 100 °C;
analyzing the temperature and the coil resistance, and as shown in FIG. 3, calculating a correlated influence curve and a correlated influence temperature interval; and
fitting the influence curve to obtain a temperature influence parameter A₁ on the coil and the magnetic ring within the influence temperature interval, where A₁ is equal to the value y1 calculated in FIG. 3 at a corresponding temperature.

In this embodiment, in order to obtain the influence parameter of temperature affecting the drive circuit of the excitation coil, the following steps are performed:
maintaining the coil and the magnetic ring, the detection circuit of the coil, and the main control circuit in a 25 °C environment, and acquiring a temperature and an excitation output amplitude of the drive circuit of the excitation coil in a temperature rise process within a temperature range of 0 to 100 °C;
analyzing the temperature and the excitation output amplitude, and as shown in FIG. 4, calculating a correlated influence curve and a correlated influence temperature interval; and
fitting the influence curve to obtain a temperature influence parameter B₁ on the drive circuit of the excitation coil within the influence temperature interval, where B₁ is equal to the value y2 calculated in FIG. 4 at a corresponding temperature.

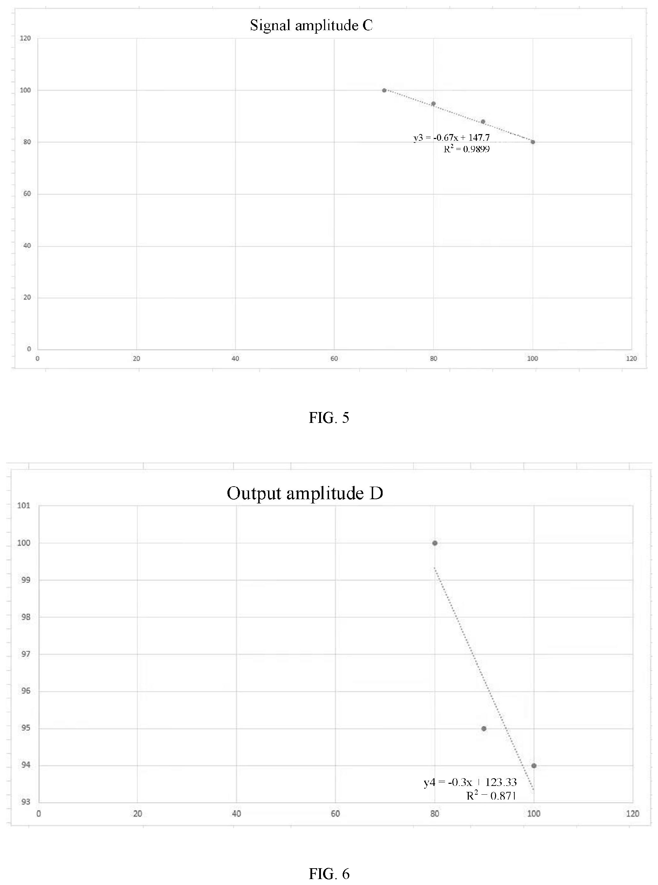

In this embodiment, in order to obtain the influence parameter of temperature affecting the detection circuit of the induction coil, the following steps are performed:
maintaining the coil and the magnetic ring, the drive circuit of the excitation coil, and the main control circuit in a 25 °C environment, and acquiring a temperature and a detection amplitude of the detection circuit of the induction coil in a temperature rise process within a temperature range of 0 to 100 °C;
analyzing the temperature and the detection amplitude, and as shown in FIG. 5, calculating a correlated influence curve and a correlated influence temperature interval; and
fitting the influence curve to obtain a temperature influence parameter C₁ on the detection circuit of the induction coil within the influence temperature interval, where C₁ is equal to the value y3 calculated in FIG. 5 at a corresponding temperature.

In this embodiment, in order to obtain the influence parameter of temperature affecting the main control circuit, the following steps are performed:
maintaining the coil and the magnetic ring, the drive circuit of the excitation coil, and the detection circuit of the induction coil in a 25 °C environment, and acquiring a temperature and an output amplitude of the main control circuit in a temperature rise process within a temperature range of 0 to 100 °C;
analyzing the temperature and the output amplitude of the main control circuit, and as shown in FIG. 6, calculating a correlated influence curve and a correlated influence temperature interval; and
fitting the influence curve to obtain a temperature influence parameter D₁ on the main control circuit within the influence temperature interval, where D₁ is equal to the value y4 calculated in FIG. 6 at a corresponding temperature.

A formula for calculating the first influence factor is: ${K}_{1} = {A}_{1} lg \left({T}_{1}{/ T}_{0}\right) .$

In the formula, K₁ represents the first influence factor, A₁ represents the temperature influence parameter on the coil and the magnetic ring, T₁ represents a current temperature of the coil and the magnetic ring, and T₀ represents a reference temperature, and in this embodiment, is 25 °C, where 0 °C ≤ T₁ ≤ 100 °C.

A formula for calculating the second influence factor is: ${K}_{2} = {B}_{1} lg \left({T}_{2}{/ T}_{0}\right) .$

In the formula, K₂ represents the second influence factor, B₁ represents the temperature influence parameter on the drive circuit of the excitation coil, T₂ represents a current temperature of the drive circuit of the excitation coil, T₀ represents a reference temperature, and T₂ ≥ 75 °C;

A formula for calculating the third influence factor is: ${K}_{3} = {C}_{1} lg \left({T / T}_{0}\right) .$

In the formula, K₃ represents the second influence factor, C₁ represents the temperature influence parameter on the detection circuit of the induction coil, T₃ represents a current temperature of the detection circuit of the induction coil, T₀ represents a reference temperature, and T₃ ≥ 75 °C.

A formula for calculating the fourth influence factor is: ${K}_{4} = {D}_{1} lg \left({T / T}_{0}\right) .$

In the formula, K₄ represents the second influence factor, D₁ represents the temperature influence parameter on the main control circuit, T₄ represents a current temperature of the main control circuit, T₀ represents a reference temperature, and T₄ ≥ 85 °C.

A formula for calculating the temperature compensation coefficient is: ${F}_{m} = {T}_{1} \times {K}_{1} + {T}_{2} \times {K}_{2} + {T}_{3} \times {K}_{3} + {T}_{4} \times {K}_{4} .$

In the formula, Fₘ is the temperature compensation coefficient.

This embodiment just provides one specific implementation, and modifications and adjustments may be made according to the actual equipment.

### Embodiment 2

Based on the same inventive concept as in Embodiment 1, this embodiment illustrates a temperature compensation apparatus for a metal wear debris sensor. The apparatus includes:
an obtaining module, configured to obtain influence parameters relating to an internal coil and a magnetic ring of a target metal wear debris sensor, a drive circuit of an excitation coil, a detection circuit of an induction coil, and a main control circuit, where the influence parameters include: a temperature influence parameter on the coil and the magnetic ring, a temperature influence parameter on the drive circuit of the excitation coil, a temperature influence parameter on the detection circuit of the induction coil, and a temperature influence parameter on the main control circuit;
a first calculation module, configured to calculate a first influence factor based on the temperature influence parameter on the coil and the magnetic ring; calculate a second influence factor based on the temperature influence parameter on the drive circuit of the excitation coil and the temperature influence parameter on the detection circuit of the induction coil; calculate a third influence factor based on the temperature influence parameter on the detection circuit of the induction coil; and calculate a fourth influence factor based on the temperature influence parameter on the main control circuit;
a second calculation module, configured to calculate a temperature compensation coefficient based on a currently acquired temperature and the calculated first influence factor, second influence factor, third influence factor, and fourth influence factor; and
a compensation module, configured to amplify or attenuate an acquired signal based on the temperature compensation coefficient.

### Embodiment 3

Based on the same inventive concept as in other embodiments, this embodiment illustrates a computer-readable storage medium storing one or more programs. The one or more programs include an instruction. When executed by a computing device, the instruction causes the computing device to perform the method.

### Embodiment 4

Based on the same inventive concept as in other embodiments, this embodiment illustrates a computer device. The computer device includes: one or more processors, a memory, and one or more programs, where the one or more programs are stored in the memory and are configured to be executed by the one or more processors, and the one or more programs include an instruction for performing the method.

Persons skilled in the art should understand that the embodiments of this application may be provided as a method, a system, or a computer program product. Therefore, this application may be implemented in the form of a complete hardware embodiment, a complete software embodiment, or a combination of software and hardware embodiments. In addition, this application may be implemented in the form of a computer program product on one or more computer-operable storage media (including, but not limited to, a disk memory, a CD-ROM, an optical memory, or the like) containing computer-executable program code.

This application is described with reference to a flowchart and/or a block diagram of a method, a device (system), and a computer program product according to the embodiments of this application. Understandably, computer program instructions may implement each procedure and/or block in the flowchart and/or the block diagram, or a combination of procedures and/or blocks in the flowchart and/or the block diagram. The computer program instructions may be provided for a universal computer, a dedicated computer, an embedded processor, or a processor of other programmable data processing devices to bring forth a machine, so that the instructions executed by the computer or the processor of other programmable data processing devices bring forth an apparatus that is configured to implement functions specified in one or more processes in a flowchart and/or one or more blocks in a block diagram.

Alternatively, the computer program instructions may be stored in a computer-readable memory capable of inducing the computer or other programmable data processing devices to work in a specific way, so that the instructions stored in the computer-readable memory bring forth a manufactured product that includes an instruction device. The instruction device implements the functions specified in one or more processes in a flowchart and/or one or more blocks in a block diagram.

Alternatively, the computer program instructions may be loaded onto a computer or other programmable data processing devices, so as to perform a series of operation steps on the computer or other programmable devices to actuate computerized processing. In this way, the instructions executed on the computer or other programmable devices give rise to the steps that are used to implement the functions specified in one or more processes in a flowchart and/or one or more blocks in a block diagram.

The above descriptions are merely preferred embodiments of this application. It is noted that various improvements and variations, which may be made by a person of ordinary skill in the art without departing from the technical principles of this application, shall still fall within the protection scope of this application.

## Claims

1. A temperature compensation method for a metal wear debris sensor, **characterized in that** the method comprises the following steps:
obtaining influence parameters relating to an internal coil and a magnetic ring of a target metal wear debris sensor, a drive circuit of an excitation coil, a detection circuit of an induction coil, and a main control circuit, wherein the influence parameters comprise: a temperature influence parameter on the coil and the magnetic ring, a temperature influence parameter on the drive circuit of the excitation coil, a temperature influence parameter on the detection circuit of the induction coil, and a temperature influence parameter on the main control circuit;
calculating a first influence factor based on the temperature influence parameter on the coil and the magnetic ring; calculating a second influence factor based on the temperature influence parameter on the drive circuit of the excitation coil and the temperature influence parameter on the detection circuit of the induction coil; calculating a third influence factor based on the temperature influence parameter on the detection circuit of the induction coil; and calculating a fourth influence factor based on the temperature influence parameter on the main control circuit;
calculating a temperature compensation coefficient based on a currently acquired temperature and the calculated first influence factor, second influence factor, third influence factor, and fourth influence factor; and
amplifying or attenuating an acquired signal based on the temperature compensation coefficient.

2. The temperature compensation method for a metal wear debris sensor according to claim 1, **characterized in that** the obtaining of the temperature influence parameter on the coil and the magnetic ring comprises:
maintaining the drive circuit B of the excitation coil, the detection circuit C of the coil, and the main control circuit D in a fixed-temperature environment, and acquiring a temperature and a coil resistance of the coil and a magnetic ring assembly A in a temperature rise process within a target temperature range;
analyzing the temperature and the coil resistance and calculating a correlated influence curve and a correlated influence temperature interval; and
fitting the influence curve to obtain a temperature influence parameter on the coil and the magnetic ring within the influence temperature interval.

3. The temperature compensation method for a metal wear debris sensor according to claim 1, **characterized in that** the obtaining of the temperature influence parameter on the drive circuit of the excitation coil comprises:
maintaining the coil and the magnetic ring, the detection circuit of the coil, and the main control circuit in a fixed-temperature environment, and acquiring a temperature and an excitation output amplitude of the drive circuit of the excitation coil in a temperature rise process within a target temperature range;
analyzing the temperature and the excitation output amplitude and calculating a correlated influence curve and a correlated influence temperature interval; and
fitting the influence curve to obtain a temperature influence parameter B1 on the drive circuit of the excitation coil within the influence temperature interval.

4. The temperature compensation method for a metal wear debris sensor according to claim 1, **characterized in that** the obtaining of the temperature influence parameter on the detection circuit of the induction coil comprises:
maintaining the coil and the magnetic ring, the drive circuit of the excitation coil, and the main control circuit in a fixed-temperature environment, and acquiring a temperature and a detection amplitude of the detection circuit of the induction coil in a temperature rise process within a target temperature range;
analyzing the temperature and the detection amplitude and calculating a correlated influence curve and a correlated influence temperature interval; and
fitting the influence curve to obtain a temperature influence parameter C1 on the detection circuit of the induction coil within the influence temperature interval.

5. The temperature compensation method for a metal wear debris sensor according to claim 1, **characterized in that** the obtaining of the temperature influence parameter on the main control circuit comprises:
maintaining the coil and the magnetic ring, the drive circuit of the excitation coil, and the detection circuit of the induction coil in a fixed-temperature environment, and acquiring a temperature and an output amplitude of the main control circuit in a temperature rise process in the fixed-temperature environment;
analyzing the temperature and the output amplitude of the main control circuit and calculating a correlated influence curve and a correlated influence temperature interval; and
fitting the influence curve to obtain a temperature influence parameter D1 on the main control circuit within the influence temperature interval.

6. The temperature compensation method for a metal wear debris sensor according to claim 1, **characterized in that**
a formula for calculating the first influence factor is: ${K}_{1} = {A}_{1} lg \left({T}_{1}/{T}_{0}\right)$
wherein K₁ represents the first influence factor, A₁ represents the temperature influence parameter on the coil and the magnetic ring, T₁ represents a current temperature of the coil and the magnetic ring, T₀ represents a reference temperature, and -30 °C ≤ T₁ ≤ 100 °C;
a formula for calculating the second influence factor is: ${K}_{2} = {B}_{1} lg \left({T}_{2}/{T}_{0}\right)$
wherein K₂ represents the second influence factor, B₁ represents the temperature influence parameter on the drive circuit of the excitation coil, T₂ represents a current temperature of the drive circuit of the excitation coil, T₀ represents a reference temperature, and T₂ ≥ 75 °C;
a formula for calculating the third influence factor is: ${K}_{3} = {C}_{1} lg \left(T/{T}_{0}\right)$
wherein K₃ represents the second influence factor, C₁ represents the temperature influence parameter on the detection circuit of the induction coil, T₃ represents a current temperature of the detection circuit of the induction coil, T₀ represents a reference temperature, and T₃ ≥ 75 °C; and
a formula for calculating the fourth influence factor is: ${K}_{4} = {D}_{1} lg \left(T/{T}_{0}\right)$
wherein K₄ represents the second influence factor, D₁ represents the temperature influence parameter on the main control circuit, T₄ represents a current temperature of the main control circuit, T₀ represents a reference temperature, and T₄ ≥ 85 °C.

7. The temperature compensation method for a metal wear debris sensor according to claim 6, **characterized in that** a formula for calculating the temperature compensation coefficient is: ${F}_{m} = {T}_{1} \times {K}_{1} + {T}_{2} \times {K}_{2} + {T}_{3} \times {K}_{3} + {T}_{4} \times {K}_{4}$ wherein Fₘ is the temperature compensation coefficient.

8. A temperature compensation apparatus for a metal wear debris sensor, **characterized in that**
an obtaining module, configured to obtain influence parameters relating to an internal coil and a magnetic ring of a target metal wear debris sensor, a drive circuit of an excitation coil, a detection circuit of an induction coil, and a main control circuit, wherein the influence parameters comprise: a temperature influence parameter on the coil and the magnetic ring, a temperature influence parameter on the drive circuit of the excitation coil, a temperature influence parameter on the detection circuit of the induction coil, and a temperature influence parameter on the main control circuit;
a first calculation module, configured to calculate a first influence factor based on the temperature influence parameter on the coil and the magnetic ring; calculate a second influence factor based on the temperature influence parameter on the drive circuit of the excitation coil and the temperature influence parameter on the detection circuit of the induction coil; calculate a third influence factor based on the temperature influence parameter on the detection circuit of the induction coil; and calculate a fourth influence factor based on the temperature influence parameter on the main control circuit;
a second calculation module, configured to calculate a temperature compensation coefficient based on a currently acquired temperature and the calculated first influence factor, second influence factor, third influence factor, and fourth influence factor; and
a compensation module, configured to amplify or attenuate an acquired signal based on the temperature compensation coefficient.

9. A computer-readable storage medium storing one or more programs, **characterized in that** the one or more programs comprise an instruction; when executed by a computing device, the instruction causes the computing device to perform the method according to any one of claims 1 to 7.

10. A computer device, **characterized in that** the computer device comprises:
one or more processors, a memory, and one or more programs, wherein the one or more programs are stored in the memory and are configured to be executed by the one or more processors, and the one or more programs comprise an instruction for performing the method according to any one of claims 1 to 7.
